# EUROPÄISCHE PATENTSCHRIFT

(11) **EP 0 554 504 B1**
(45) Veröffentlichungstag und Bekanntmachung des Hinweises auf die Patenterteilung: **05.11.1997**
(21) Anmeldenummer: 92113993.7
(22) Anmeldetag: 17.08.1992
(51) Int. Cl.: G06K 7/10, G06K 7/14, G02B 26/10

(54) **Fokusverstelleinrichtung zur Verstellung der Tiefenschärfe einer optischen Abtasteinrichtung**
Device for a focus adjustment for changing the depth of focus of an optical scanner
Dispositif pour le réglage de la mise au point pour changer la profondeur de champ d'un lecteur optique

(30) Priorität: 21.12.1991 DE 4142701
(43) Veröffentlichungstag der Anmeldung: 11.08.1993
(73) Patentinhaber: Leuze electronic GmbH + Co., D-73277 Owen (DE)
(72) Erfinder: Heppner, Joachim, W-7311 Bissingen (DE); Keinath, Armin, W-7433 Dettingen (DE); Claus, Armin, W-7440 Nürtingen (DE)

(56) Entgegenhaltungen:
- DE-A- 3 444 106
- US-A- 4 560 862

## Beschreibung

Die Erfindung betrifft eine optische Abtasteinrichtung zum Lesen von Strichcode-Symbolen, bei welcher ein von einem Lichtsender ausgehender Sendelichtstrahl über ein Vielfacettenpolygon abgelenkt und mittels einer entlang des Sendelichtstrahls verschiebbar angeordnete Fokussiereinrichtung zu einem kleinen Lichtfleck auf eine Leseebene ausgerichtet wird und daß ein durch unterschiedliche Reflexion der Striche und des Untergrundes eines Strichcode-Symbols eine Leistungsmodulation aufweisender Empfangsstrahl über eine Empfangsoptik zu einer Auswerteeinheit gelangt, wobei die Umlenkung sowohl des Sendelichtstrahls als auch des Empfangslichtstrahls über dieselbe Polygonfacette erfolgt.

Eine Abtastvorrichtung dieser Art ist aus der DE-PS 34 441 06 bekannt. Die Fokussiereinrichtung ist in Form einer Autofocus-Vorrichtung ausgebildet. Hierzu wird der Lichtweg zwischen der Fokussiereinrichtung und der Leseebene, in der sich das Objekt befindet, mit einer Entfernungsmeßeinrichtung erfaßt. Dieser Wert geht als Sollwert, in ein Rechensystem ein. Dort wird die Differenz zwischen dem Istwert und dem Sollwert berechnet, wobei der Istwert durch die Position der momentan eingestellten Strahltaille des Sendelichtstrahls gegeben ist. Das Rechensystem gibt als Stellgröße eine Positionsveränderung für die Fokussiereinrichtung aus, die mittels einer elektromagnetischen, an die Fokussiereinrichtung gekoppelten Verschiebeeinrichtung realisert ist. Vorteilhaft bei dieser Anordnung ist, daß die Einstellung der Fokussiereinrichtung auf eine Strichcodevorlage in einer fest vorgegebenen Leseebene selbsttätig erfolgt.

Für einen Einsatz von Abtastvorrichtungen, bei denen sich der Abstand des zu lesenden Strichcodes oder sonstigen Markierungen von der Abtastvorrichtung rasch ändert, ist eine derartige Vorrichtung jedoch nicht geeignet, da für jeden Lesevorgang bei sich im Abstand verändernden Leseebene die Fokussiereinrichtung über einen Regelmechanismus neu justiert werden müsste.

Dieser Zeitaufwand ist so groß, daß schnell aufeinanderfolgende Lesevorgänge von Strichcode-Symbolen in verschiedenen Leseebenen, wie beispielsweise Strichcodes auf Paketen, deren Größenunterschiede bis zu einem Meter betragen können, auf einem Förderband, dessen Geschwindigkeit im Bereich Meter / Sekunde liegen kann, nicht mehr bewältigt werden können.

Zudem ist bei den vorbekannten Abtastvorrichtungen eine zusätzliche Entfernungsmessung zur Bestimmung der aktuellen Position des Strichcodes notwendig, wozu ein zusätzlicher apparativer Aufwand erforderlich ist.

Der Erfindung liegt die Aufgabe zugrunde, eine Fokussiereinrichtung für eine optische Abtasteinrichtung zu schaffen, die ein Lesen von Strichcode-Symbolen oder dergleichen Markierungen innerhalb eines räumlichen, aus mehreren Leseebenen bestehenden Lesebereiches, ermöglicht.

Diese Aufgabe wird erfindungsgemäß dadurch gelöst, daß die Fokussiereinrichtung entlang des Sendelichtstrahls periodisch verschiebbar angeordnet ist.

Die Verschiebung der Fokussiereinrichtung erfolgt zweckmäßigerweise kontinuierlich und selbsttätig über eine Verschiebevorrichtung, wobei die maximale Amplitude und die Verschiebefrequenz innerhalb vorgegebener Intervalle einstellbar sind. Die Amplitude bestimmt die Ausdehnung des Lesebereichs. Der Lesebereich ist gleichbedeutend mit dem Tiefenschärfenbereich der optischen Abtastvorrichtung, wobei jede Leseebene innerhalb des Lesebereichs pro Periodendauer zweimal durchfahren wird, so daß ein Strichcode in jeder innerhalb des Lesebereichs befindlichen Leseebene innerhalb einer Periodendauer erfaßt werden kann. Durch ein Verändern der Amplitude der Verschiebung der Fokussiereinrichtung kann die Ausdehnung des Lesebereichs eingestellt werden und so den Anforderungen des Meßprozesses angepaßt werden.

Dies ist insbesondere dann von Vorteil, wenn der Abstand der Abtastvorrichtung von den einzelnen Strichcodes so stark variiert, daß verschiedene Strichcodes mit einer fest vorgegebenen Leseebene nicht mehr erkannt werden können. In diesem Fall müßte bei den vorbekannten Abtastvorrichtungen eine Nachjustierung von Hand oder über ein mit einer Entfernungsmessung verbundenes Regelsystem vorgenommen werden, was jedoch zeitaufwendig ist und somit den Betrieb der Abtastvorrichtung auf sich in relativ großen Zeitabständen wiederholende Lesevorgänge begrenzt.

Mit der erfindungsgemäßen Abtastvorrichtung können Strichcodesymbole erkannt werden, deren Position in Richtung der optischen Achse der Optik der Abtasteinrichtung stark variiert, wobei selbst zeitlich rasch aufeinander folgende Strichcodes in verschiedenen Leseebenen erkannt werden können. Je nach Folgefrequenz, mit der verschiedene Strichcodes die Abtastvorrichtung passieren, kann die Verschiebefrequenz der Fokussiereinrichtung zweckmäßigerweise innerhalb einer oberen und unteren Grenzfrequenz eingestellt werden. Dabei wird die obere Grenzfrequenz vorteilhafterweise kleiner als die Abtastfrequenz gewählt, so daß in jeder Leseebene mehrere Abtastungen durchlaufen werden. Dadurch kann in jeder durchlaufenden Leseebene ein Strichcode sicher erkannt werden.

In einer vorteilhaften Ausführungsform kann die Fokussiereinrichtung als Autofocus ausgebildet sein. Dabei wird dessen Verschiebefrequenz in den Bereich der unteren Grenzfrequenz oder exakt auf die untere Grenzfrequenz gesenkt, sobald über einen an die Verschiebevorrichtung gekoppelten Regelmechanismus eine Leseebene mit einen Strichcode ausgerichtet ist. Die Ausrichtung erfolgt über die Auswertung des Empfangslichtstrahls. Die Folge der registrierten Hell-Dunkelübergänge wird bezüglich Folgefrequenz und Amplitude mit einem vorzugsweise in einer Rechnereinheit gespeicherten Hell-Dunkelmuster eines Strichcodes verglichen. Sobald eine Übereinstimmung erkannt wird, gilt die Leseebene eines Strichcodes als erkannt. Mit diesem Verfahren kann erkannt werden, ob die aktuelle Leseebene mit der Position des Strichcodes übereinstimmt. Ferner kann durch die Auswertung einer Folge von Empfangssignalen erkannt werden, ob eine Verstellung der Fokussiereinrichtung eine Annäherung oder ein Entfernen der aktuellen Leseebene von der Position des Strichcodes bewirkt.

Diese Information wird zum Einjustieren der Leseebene auf die Position des Strichcodes verwendet. Vorzugsweise geht die Abweichung des im Empfangslichtstrahls enthaltenen Hell-Dunkelmusters von einem gespeicherten Referenzmuster eines Strichcodes als Stellgröße in einen Regelkreis zum Einjustieren der Fokussiereinrichtung ein. Falls die untere Grenzfrequenz 0 Hz beträgt, kann die Fokussiereinrichtung zur Einstellung der auf diese Weise bestimmten Leseebene arretiert sein.

Dabei kann dieselbe Verschiebevorrichtung sowohl zur Vergößerung des Lesebereichs als auch zur Autofokussierung eingesetzt werden. Vorteilhafterweise gliedert sich der Lesevorgang in 2 Phasen. Während der ersten Phase wird ein mehrere Leseebenen umspannender Lesebereich von der Abtastvorrichtung durchfahren, indem die Verschiebevorrichtung mit konstanter Maximalamplitude und konstanter Verschiebefrequenz bewegt wird. Variieren die Leseebenen, in denen sich die Strichcodes befinden stark, so wird dieser Modus beibehalten. Befinden sich jedoch die Strichcodes in etwa derselben Leseebene, so kann die Verschiebevorrichtung gegebenenfalls zur Feinjustierung auf Autofocusbetrieb umgestellt werden. Hierzu wird der Regelmechanismus des Autofokussystems zur Ermittlung der aktuellen Leseebene aktiviert und anschließend die Verschiebevorrichtung arretiert. Die Umschaltung zwischen Autofocusbetrieb und fortlaufend periodisch bewegter Verschiebeeinrichtung kann einerseits extern gesteuert werden, vorzugsweise über ein Computerprogramm.

Andererseits kann das Umschalten automatisiert erfolgen. Die von der Abtasteinrichtung aufgenommenen Daten werden in einem hierfür vorgesehenen Computerprogramm gespeichert.

Die Beurteilung, wann in einer bestimmten Leseebene Strichcodes gehäuft erkannt werden, so daß ein Umschalten auf Autofokusbetrieb erfolgt, sowie die Auswahl der mit dem Autofokussystem einzustellenden Leseebene kann insbesondere mit dem Fuzzy-Logic-Verfahren bewerkstelligt werden. Zweckmäßigerweise bilden die einzustellenden Positionen der Leseebene, die Zeit, die zur Einstellung der Positionswerte benötigt wird, die Intensitätsmuster der Empfangssignale, die den Hell-Dunkelmustem der Strichcodes entsprechen sowie deren Häufigkeit pro Zeiteinheit die linguistischen Variablen des Fuzzy-Logic-Modells.

In einer vorteilhaften Ausführungsform ist die Verschiebeeinrichtung als ein auf einer parallel zum Sendelichtstrahl verlaufenden Führungsbahn verschiebbar aufsitzender Schlitten ausgebildet, der eine der Führungsbahn angepaßte Ausnehmung aufweist und der an seiner der Fokussiereinrichtung zugewandten Stirnseite eine Befestigungsvorrichtung für die Fokussiereinrichtung, die als in einer Aufnahme gelagertes Objektiv ausgebildet ist, aufweist. Die Verschiebung des Schlittens erfolgt zweckmäßigerweise mittels eines Schrittmotors.

In einer weiteren vorteilhaften Ausbildungsform ist die Verschiebevorrichtung in Form eines piezoelektrischen Stellelements ausgebildet. Dem Stellelement wird elektrische Energie zugeführt, die unter Ausnutzung der piezoelektrischen Eigenschaften des Stellelements in eine mechanische Bewegung umgesetzt wird. Der Vorteil dieser Anordnung besteht darin, daß die Verschiebung der Fokussiereinrichtung ohne Getriebe oder mechanische Stellglieder erfolgen kann.

Das Stellelement ist vorzugsweise an seinen gegenüberliegenden Stirnseiten mechanisch mit der Sendelichtquelle und der Fokussiereinrichtung verbunden, so daß die entlang des Sendelichtstrahls gerichtete piezoelektrische Verschiebung des Stellelements eine Änderung des Abstands zwischen Sendelichtquelle und Fokussiereinrichtung bewirkt.

Zweckmäßigerweise wird der Abstand zwischen Sendelichtquelle und Fokussiereinrichtung so gewählt, daß bereits eine relativ kleine durch die Verschiebevorrichtung erzeugte Verschiebung der Fokussiereinrichtung eine große Änderung der Position der Leseebene bewirkt.

Ein Ausführungsbeispiel wird nachstehend anhand der Zeichnungen erläutert.
Es zeigen:
- Fig. 1:: eine schematische Anordnung der Abtastvorrichtung in der Drauf sicht,
- Fig. 2:: die Anordnung nach Fig. 1 in einer Seitenansicht,
- Fig. 3:: eine schematische Anordnung einer Ablastvorrichtung an einer Förderbandanlage zum Erkennen von an Paketen angebrachten Strichcodesymbolen.

Der Lichtsender (2), vorzugsweise ein Laser, erzeugt den Sendelichtstrahl (3), der zunächst über einen Kollimator (16) und eine Lochblende (17) geführt wird, womit ein Gauß-Strahl mit Kreisprofil erzeugt wird. Anschließend wird der Sendelichtstrahl (3) über ein Okular (18) und Objektiv (14) fokussiert, wobei das Objektiv (14) ein Bestandteil der verschiebbaren Fokussiereinrichtung (5) ist. Die Fokussiereinrichtung (5) besteht im wesentlichen aus dem auf der Führungsbahn (9) längs zum Sendelichtstrahl (3) verschiebbaren Schlitten (10), wobei das Objektiv (14) fest mit dem Schlitten (10) verbunden ist. Das Objektiv (14) ist in eine Aufnahme (15) eingefaßt, die in die hierfür am Schlitten (10) vorgesehene Befestigungsvorrichtung (12) greift. Die Befestigungsvorrichtung (12) besteht aus zwei Schrauben (19), die durch zwei in der Aufnahme (15) angeordnete Langlöcher (20) greifen und im Schlitten (10) verankert sind.

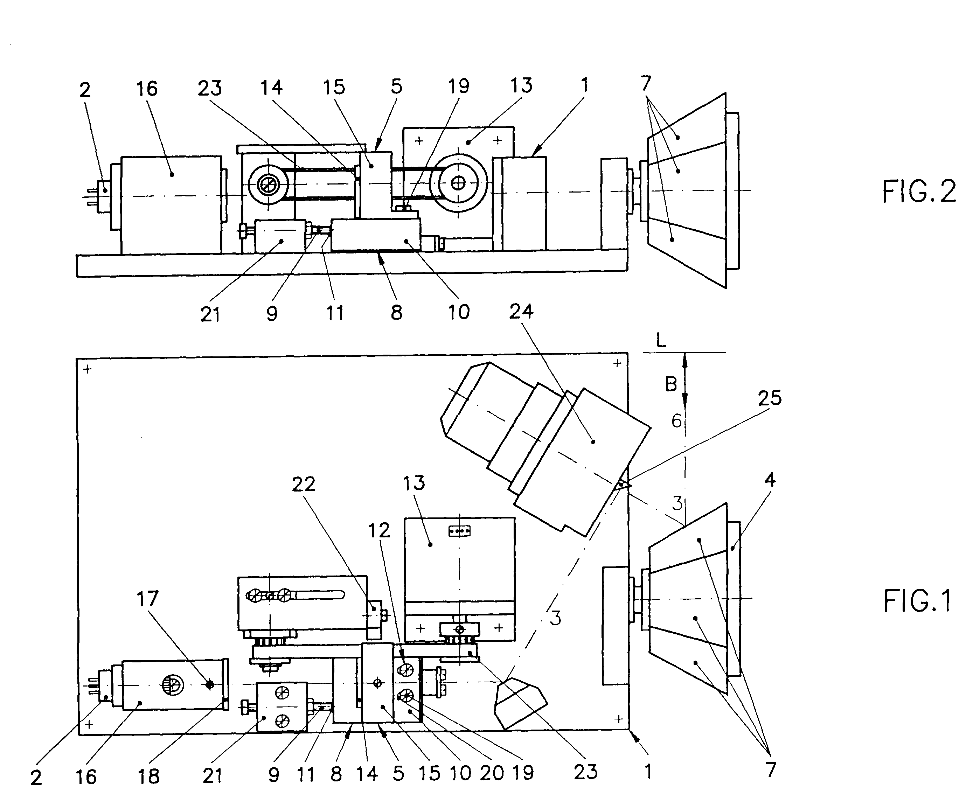

Der Schlitten (10) sitzt mit einer parallel zum Sendelichtstrahl (3) verlaufenden Ausnehmung (11), in der die Führungsbahn (9) geführt ist. In der in den Figuren 1 und 2 gezeigten Ausführungsform besitzt die Führungsbahn (9) kreisförmigen Querschnitt und ist mit einem Zylinderrollenlager in dem Schlitten (10) gelagert. Ein Anschlag (21) begrenzt die Bewegung des Schlittens (10) in Richtung des Lichtsenders (2) mechanisch.

Die Ansteuerung des Schlittens (10) erfolgt über einen Schrittmotor (13), wobei an die Ansteuerungsschaltung eine Lichtschranke (22) angekoppelt ist, so daß der Verfahrweg des Schlittens (10) auch elektronisch begrenzt ist. Der Schrittmotor (13) ist über einen Zahnriemen (23) mit dem Schlitten (10) verbunden.

Der fokussierte Sendelichtstrahl (3) wird über ein um seine Längsachse rotierendes Vielfacettenpolygon (4) über ein auf einer Empfangsoptik (24) aufgekittetes Miniaturprisma (25) abgelenkt und in die Leseebene L gespiegelt, wobei die Leseebene L durch die Strahltaille des Laserstrahls definiert ist. Das von einem in den Figuren 1 und 2 nicht dargestellten Objekt als Empfangslichtstrahl (6) reflektierte Licht wird in der Empfangsoptik (24) gesammelt und in einer Empfangselektronik ausgewertet. Dabei wird der Empfangslichtstrahl (6) über dieselbe Polygonfacette (7) wie der Sendelichtstrahl (3) zurückgespiegelt.

Die Abtastfrequenz ergibt sich aus dem Produkt aus der Drehzahl des Vielfacettenpolygons (4) und der Anzahl der Polygonfacetten (7) des Vielfacettenpolygons (4). Im vorliegenden Ausführungsbeispiel ist die Drehzahl konstant bei 3000 min.⁻¹, die Anzahl der Polygonfacetten (7) ist 8. Dies führt auf eine Abtastfrequenz von 400 l/s.

Damit während des periodischen Verschiebens der Fokussiereinrichtung (5) ein Strichcode in jeder der durchfahrenen Leseebenen L sicher erkannt wird, sollten während der Verweilzeit in einer Leseebene L eine oder mehrere komplette Abtastungen erfolgen.

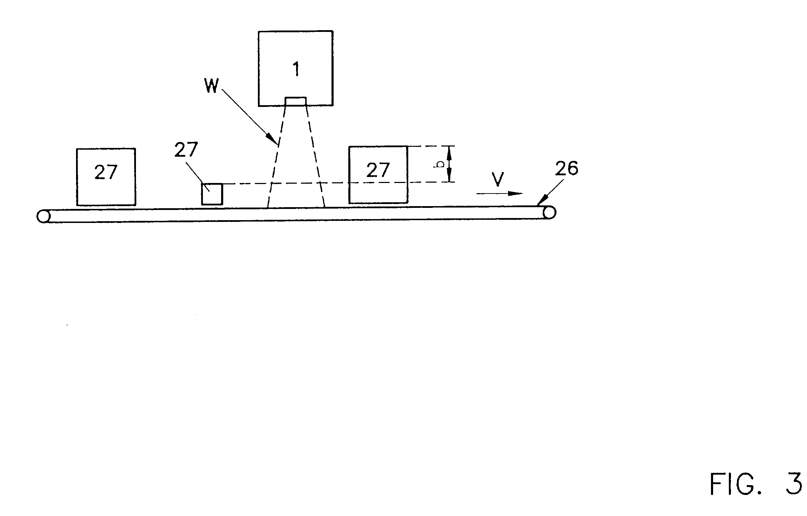

Dies soll anhand des in Fig. 3 gezeigten Anwendungsbeispiels verdeutlicht werden. Der Sendelichtstrahl (3) der Abtastvorrichtung (1) ist auf ein mit einer Geschwindigkeit V bewegtes Förderband (26) gerichtet. Der vom Sendelichtstrahl (3) überstrichene Winkelbereich ist mit W gekennzeichnet. Die Förderbandgeschwindigkeit beträgt typischerweise 2 m/s.

Auf dem Förderband (26) werden Pakete (27) unterschiedlicher Höhe transportiert, wobei die Pakete (27) mit Strichcode-Symbolen gekennzeichnet sind. Die Strichcode-Symbole sind zweckmäßigerweise an den der Abtasteinrichtung (1) zugewandten Stirnseiten der Pakete (27) angeordnet. Die Dimensionen dieser Pakete (27) können typischerweise bis zu einem Meter variieren, so daß auch die Ausdehnung des Lesebereichs B einen Meter betragen muß. Die Fokussiereinrichtung (5) wird hierfür mit einer entsprechend ausgelegten Amplitude periodisch verschoben.

Der kleinste Abstand d innerhalb dessen zwei Strichcodes längs des Förderbands (26) folgen können, und von der Abtasteinrichtung (1) registriert werden können, beträgt typischerweise 10 cm. Innerhalb der Reaktionszeit t = d/v = 0,05 sec muß die Fokussiereinrichtung (5) eine volle Periode durchlaufen, damit jeder Strichcode sicher erkannt werden kann. Dies entspricht einer Verschiebefrequenz der Fokussiereinrichtung (5) von 1 0 Hz.

Demgegenüber beträgt die Abtastfrequenz 400 Hz. Dies bedeutet, daß während der Periodendauer der Verschiebung der Fokussiereinrichtung (5) insgesamt 40 Abtastungen der Abtastvorrichtung (1) erfolgen. Je höher die Zahl der Abtastungen pro Periodendauer desto sicherer wird ein Strichcode innerhalb des Lesebereichs B erkannt, d. h. desto größer ist die Auflösung der Abtastvorrichtung (1).

Die Zahl der erforderlichen Abtastungen pro Periodendauer wird dadurch begrenzt, daß ein Lesen eines Strichcodes nicht nur exakt in der Leseebene L, sondern in einem endlichen Bereich Δ x räumlich vor bzw. hinter der Leseebene entlang der optischen Achse möglich ist. Es sind daher pro Periodendauer 2b/Δ x Abtastungen notwendig, damit jeder im Lesebereich befindliche Strichcode innerhalb einer Periodendauer erkannt werden kann, wobei b die Ausdehnung des Lesebereichs B ist. Ein typischer Wert für Δ x liegt bei 0,2 m. Dies ergibt, daß pro Periodendauer 10 Abtastungen erforderlich sind.

## Patentansprüche

1. Optische Abtasteinrichtung zum Lesen von Strichcode-Symbolen, bei welcher ein von einem Lichtsender (2) ausgehender Sendelichtstrahl (3) mittels einer entlang des Sendelichtstrahls (3) verschiebbar angeordnete Fokussiereinrichtung (5) auf ein Vielfacettenpolygon (4) gelenkt und von diesem zu einem kleinen Lichtfleck auf eine Leseebene (2) ausgerichtet wird, von der ein durch unterschiedliche Reflexion der Striche und des Untergrundes eines Strichcode-Symbols ein eine Leistungsmodulation aufweisender Empfangsstrahl über eine Empfangsoptik (24) zu einer Auswerteeinheit gelangt, wobei die Umlenkung sowohl des Sendelichtstrahls (3) als auch des Empfangslichtstrahls (6) über dieselbe Polygonfacette (7) erfolgt, dadurch gekennzeichnet, daß die Fokussiereinrichtung (5) entlang des Sendelichtstrahls (3) periodisch verschiebbar angeordnet ist.

2. Optische Abtasteinrichtung nach Anspruch 1, dadurch gekennzeichnet, daß die Verschiebung der Fokussiereinrichtung (5) mittels einer Verschiebevorrichtung (8) selbsttätig erfolgt.

3. Optische Abtastvorrichtung nach Anspruch 1 oder 2, dadurch gekennzeichnet, daß die Verschiebung der Fokussiereinrichtung (5) mittels einer Verschiebevorrichtung (8) kontinuierlich erfolgt.

4. Optische Abtasteinrichtung nach einem der Ansprüche 1 bis 3, dadurch gekennzeichnet, daß die maximale Amplitude der Verschiebung der Fokussiereinrichtung (5) einstellbar ist.

5. Optische Abtastvorrichtung nach einem der Ansprüche 1 - 4, dadurch gekennzeichnet, daß die Frequenz der Verschiebung der Fokussiereinrichtung (5) innerhalb eines durch eine untere und obere Grenzfrequenz begrenzten Intervalls einstellbar ist.

6. Optische Abtasteinrichtung nach Anspruch 5, dadurch gekennzeichnet, daß die obere Grenzfrequenz kleiner ist als die Abtastfrequenz der Abtasteinrichtung.

7. Optische Abtasteinrichtung nach Anspruch 5 oder 6, dadurch gekennzeichnet, daß die untere Grenzfrequenz nahezu oder exakt 0 Hz beträgt.

8. Optische Abtasteinrichtung nach einem der Ansprüche 1 - 7, dadurch gekennzeichnet, daß die Fokussiereinrichtung (5) als Autofocus ausgebildet ist, wobei dessen Verschiebefrequenz auf die untere Grenzfrequenz oder bis in deren Bereich gesenkt wird, falls sich ein Strichcode im Bereich der Leseebene (L) der Abtasteinrichtung (1) befindet.

9. Optische Abtasteinrichtung nach Anspruch 8, dadurch gekennzeichnet, daß bei der Ausbildung der Fokussiereinrichtung (5) als Autofocus die Fokussiereinrichtung (5) zur Einstellung auf eine Leseebene (L) arretiert ist.

10. Optische Abtastvorrichtung nach einem der Ansprüche 1 - 9, dadurch gekennzeichnet, daß die Verschiebevonlchtung (8) als ein auf einer parallel zum Sendelichtstrahl (3) verlaufenden Führungsbahn (9) verschiebbar aufsitzender Schlitten (10) ausgebildet ist, der eine der Form der Führungsbahn (9) angepaßte Ausnehmung (11) aufweist und an seiner der Fokussiereinrichtung (5) zugewandten Stirnseite eine Befestigungsvorrichtung (12) für die Fokussiereinrichtung (5) aufweist.

11. Optische Abtastvorrichtung nach Anspruch 9, dadurch gekennzeichnet, daß die Fokussiereinrichtung (5) als in einer Aufnahme (15) gelagertes Objektiv (14) ausgebildet ist.

12. Optische Abtastvorrichtung nach Anspruch 9 oder 10, dadurch gekennzeichnet, daß die Verschiebung des Schlittens (10) mittels eines Schrittmotors (13) erfolgt.

## Claims

1. Optical scanning equipment for the reading of bar code symbols, in which a transmitted light beam (3) emanating from a light transmitter (2) is steered by means of a focussing equipment (5), which is arranged to be displaceable along the transmitted light beam (3), onto a multifacet polygon (4) and oriented by this into a small light spot onto a reading plane (L), from which a received beam, which displays a power modulation due to different reflection of the bars and of the background of a bar code symbol, gets by way of an optical receiving system (24) to an evaluating unit, wherein the deflection of the transmitted light beam (3) as well as also of the received light beam (6) takes place byway of the same polygon facet (7), characterised thereby, that the focussing equipment (5) is arranged to be displaceable periodically along the transmitted light beam (3).

2. Optical scanning equipment according to claim 1, characterised thereby, that the displacement of the focussing equipment (5) takes place automatically by means of a displacing device (8).

3. Optical scanning equipment according to claim 1 or 2, characterised thereby, that the displacement of the focussing equipment (5) takes place continuously by means of a displacing device (8).

4. Optical scanning equipment according to one of the claims 1 to 3, characterised thereby, that the maximum amplitude of the displacement of the focussing equipment (5) is settable.

5. Optical scanning equipment according to one of the claims 1 to 4, characterised thereby, that the frequency of the displacement of the focussing equipment (5) is settable within an interval bounded by a lower and an upper limit frequency.

6. Optical scanning equipment according to claim 5, characterised thereby, that the upper limit frequency is lower than the scanning frequency of the scanning equipment.

7. Optical scanning equipment according to claim 5 or 6, characterised thereby, that the lower limit frequency amounts to nearly or exactly 0 hertz.

8. Optical scanning equipment according to one of the claims 1 to 7, characterised thereby, that the focussing equipment (5) is constructed as automatic focussing device, wherein its displacement frequency is lowered to the lower limit frequency or into the region thereof in case a bar code is situated in the region of the reading plane (L) of the scanning equipment (1).

9. Optical scanning equipment according to claim 8, characterised thereby, that in the case of the construction of the focussing equipment (5) as automatic focussing device, the focussing equipment (5) is arrested for setting onto a reading plane (L).

10. Optical scanning equipment according to one of the claims 1 to 9, characterised thereby, that the displacing device (8) is constructed as a sliding carriage (10), which sits to be displaceable on a guide track (9) extending parallelly to the transmitted light beam (3), has a recess (11) matched to the shape of the guide track (9) and, at its end face facing the focussing equipment (5), comprises a fastening device (12) for the focussing equipment (5).

11. Optical scanning equipment according to claim 9, characterised thereby, that the focussing equipment (5) is constructed as an objective (14) borne in a receptacle (15).

12. Optical scanning equipment according to claim 9 or 10, characterised thereby, that the displacement of the sliding carriage (10) takes place by means of a stepping motor (13).

## Revendications

1. Dispositif de balayage optique pour lire des symboles de codes à barres, dans lequel un rayon lumineux d'émission (3) sortant d'un émetteur de lumière (2) est dévié sur un polyèdre (4) à plusieurs facettes au moyen d'un dispositif de focalisation (5) qui est disposé en pouvant coulisser le long du rayon lumineux d'émission (3), et dirigé par celui-ci sous la forme d'une petite tache de lumière sur un plan de lecture (L) depuis lequel un rayon de réception qui présente une modulation en puissance du fait de la différence entre la réflexion des barres et du fond d'un symbole de code à barres arrive à une unité d'exploitation par l'intermédiaire d'une optique de réception (24), cependant que tant la déviation du rayon lumineux d'émission (3) que celle du rayon lumineux de réception (6) ont lieu sur la même facette (7) du polyèdre, caractérisé par le fait que le dispositif de focalisation (5) est disposé en pouvant coulisser périodiquement le long du rayon lumineux d'émission (3).

2. Dispositif de balayage optique selon la revendication 1, caractérisé par le fait que le coulissement du dispositif de focalisation (5) a lieu automatiquement au moyen d'un dispositif de coulissement (8).

3. Dispositif de balayage optique selon la revendication 1 ou 2, caractérisé par le fait que le coulissement du dispositif de focalisation (5) a lieu continûment au moyen d'un dispositif de coulissement (8).

4. Dispositif de balayage optique selon l'une des revendications 1 à 3, caractérisé par le fait que l'amplitude maximale du coulissement du dispositif de focalisation (5) peut être réglée.

5. Dispositif de balayage optique selon l'une des revendications 1 à 4, caractérisé par le fait que la fréquence du coulissement du dispositif de focalisation (5) peut être réglée à l'intérieur d'un intervalle délimité par des fréquences limites inférieure et supérieure.

6. Dispositif de balayage optique selon la revendication 5, caractérisé par le fait que la fréquence limite supérieure est inférieure à la fréquence de balayage du dispositif de balayage.

7. Dispositif de balayage optique selon la revendication 5 ou 6, caractérisé par le fait que la fréquence limite inférieure est presque égale ou exactement égale à O Hz.

8. Dispositif de balayage optique selon l'une des revendications 1 à 7, caractérisé par le fait que le dispositif de focalisation (5) est réalisé sous la forme d'un autofocus, sa fréquence de coulissement étant diminuée jusqu'à la fréquence limite inférieure ou jusqu'au voisinage de celle-ci dans le cas où un code à barres se trouve dans la région du plan de lecture (L) du dispositif de balayage (1).

9. Dispositif de balayage optique selon la revendication 8, caractérisé par le fait que, dans le cas où le dispositif de focalisation (5) est réalisé sous la forme d'un autofocus, le dispositif de focalisation (5) est bloqué en vue du réglage sur un plan de lecture (L).

10. Dispositif de balayage optique selon l'une des revendications 1 à 9, caractérisé par le fait que le dispositif de coulissement (8) est réalisé sous la forme d'un chariot (10) qui est monté en coulissement sur une voie de guidage (9), celle-ci s'étendant parallèlement au rayon lumineux d'émission (3), qui présente un évidement (11) adapté à la forme de la voie de guidage (9) et qui comporte un dispositif de fixation (12) destiné au dispositif de focalisation (5) sur son côté frontal tourné vers le dispositif de focalisation (5).

11. Dispositif de balayage optique selon la revendication 9, caractérisé par le fait que le dispositif de focalisation (5) est réalisé sous la forme d'un objectif (14) qui est monté dans un logement (15).

12. Dispositif de balayage optique selon la revendication 9 ou 10, caractérisé par le fait que le coulissement du chariot (10) a lieu au moyen d'un moteur pas à pas (13).
